# EUROPEAN PATENT APPLICATION

(11) **EP 4 773 250 A1**
(43) Date of publication of application: **08.07.2026**
(21) Application number: 24916360.1
(22) Date of filing: 09.08.2024
(51) Int. Cl.: H01M 4/62, H01M 4/04, H01M 10/0525

(54) **ELECTRODE MANUFACTURING METHOD, BATTERY AND ELECTRIC DEVICE**

(30) Priority: 12.01.2024 CN 202410046332
(71) Applicant: Contemporary Amperex Technology Co., Limited, Ningde, Fujian 352100 (CN)
(72) Inventor: LI, Bingkun, Ningde, Fujian 352100 (CN); WANG, Maoxu, Ningde, Fujian 352100 (CN); WU, Xian, Ningde, Fujian 352100 (CN)
(74) Representative: Ziebig Hengelhaupt Intellectual Property Attorneys Patentanwaltskanzlei PartGmbB
(86) International application number: PCT/CN2024/111212
(87) International publication number: WO 2025/148305

(57) **Abstract**

The present application discloses an electrode manufacturing method, a battery, and an electrical apparatus. The electrode manufacturing method comprises steps of: providing a slurry mixed with a pore-forming agent; coating the slurry on a current collector to form an active material layer on the current collector; and electrically energizing the active material layer to cause the pore-forming agent in the active material layer to undergo an electrochemical reaction to form pores. Before the step of coating the slurry on the current collector, the method further comprises a step of: providing a roller configured to coat and convey the current collector and provided with a conductive member on a surface of the roller, the conductive member being configured to electrically connect to the current collector. The step of electrically energizing the active material layer comprises electrically energizing the current collector through the conductive member. The technical solutions provided in the present application can improve the pore-forming efficiency of the electrode, thereby enabling, when the electrode is used in the battery, the battery to have relatively high manufacturing efficiency.

## Description

### CROSS-REFERENCE TO RELATED APPLICATIONS

The present application claims priority to Chinese Patent Application 202410046332.7 filed on 12 January 2024 and titled "ELECTRODE MANUFACTURING METHOD, BATTERY, AND ELECTRICAL APPARATUS," the entire content of which is incorporated herein by reference.

### TECHNICAL FIELD

The present application relates to the technical field of batteries, and specifically relates to an electrode manufacturing method, a battery, and an electrical apparatus.

### BACKGROUND

An electrode not only is an important part of a battery, but also can be used in an electrochemical reaction scenario involved in electrolytic industry, electrocatalysis, electrochemical analysis, and other porous electrodes. For this reason, no matter in the development of battery technologies or the development of other electrochemical reaction technologies, how to improve the pore-forming efficiency of the electrode is a technical problem to be urgently solved.

### SUMMARY OF THE INVENTION

The present application provides an electrode manufacturing method, a battery, and an electrical apparatus. The technical solutions provided in the present application can improve the pore-forming efficiency of the electrode, thereby enabling, when the electrode is used in the battery, the battery to have relatively high manufacturing efficiency.

The present application is implemented through the following technical solutions:

In a first aspect, some embodiments of the present application provide an electrode manufacturing method, comprising the steps of: providing a slurry mixed with a pore-forming agent; coating the slurry on a current collector to form an active material layer on the current collector; and electrically energizing the active material layer to cause the pore-forming agent in the active material layer to undergo an electrochemical reaction to form pores. Before the step of coating the slurry on the current collector, the method further comprises a step of: providing a roller configured to coat and convey the current collector and provided with a conductive member on a surface of the roller, the conductive member being configured to electrically connect to the current collector. The step of electrically energizing the active material layer comprises electrically energizing the current collector through the conductive member.

Some embodiments of the present application provide an electrode manufacturing method, wherein a pore-forming agent that is caused to undergo an electrochemical reaction due to electrical energization is added to a slurry, and after the slurry mixed with the pore-forming agent is coated on a current collector to form an active material layer, the active material layer is electrical energized to cause the pore-forming agent to undergo the electrochemical reaction, so that an escapable gas that is generated due to the electrochemical reaction of the pore-forming agent or a substance that is separable from the active material layer and is generated due to the electrochemical reaction can be removed, and so that the active material layer efficiently forms uniform and dense pores, thereby not only accurately controlling the formation and appearance of the pores of the active material layer, but also improving the pore-forming efficiency of the electrode, and enabling, when the electrode is used in a battery, the battery to have relatively high manufacturing efficiency. Moreover, the conductive member is arranged on the roller, so that current can be conducted to the active material layer when the current collector is conveyed on the roller, thereby electrically energizing the active material layer, efficiently forming the pores on the active material layer, improving the pore-forming efficiency of the electrode, and enabling, when the electrode is used in a battery, the battery to have relatively high manufacturing efficiency.

According to some embodiments of the present application, the pore-forming agent is configured as a substance that is electrically energized to produce a gas.

In the above solutions, the pore-forming agent is defined as a substance that can generate a gas after being electrically energized, so that after the active material layer is electrically energized, the gas produced due to the electrochemical reaction can escape from the active material layer, thereby efficiently forming uniform pores on the active material layer, improving the pore-forming efficiency of the electrode, and enabling, when the electrode is used in the battery, the battery to have relatively high manufacturing efficiency.

According to some embodiments of the present application, the pore-forming agent comprises, e.g., water, methanol, ethanol, formic acid, or ammonium carbamate.

In the above solutions, when the pore-forming agent is water, oxygen and hydrogen can be generated by electrically energizing the active material layer, and quickly escape from the active material layer, thus quickly forming uniform pores on the active material layer. When the pore-forming agent is methanol, a gas, such as carbon dioxide, can be generated by electrically energizing the active material layer. The carbon dioxide quickly escapes from the active material layer, thereby quickly forming uniform pores on the active material layer. When the pore-forming agent is ethanol, gases, such as carbon dioxide and methane, can be generated by electrically energizing the active material layer. The carbon dioxide and methane can quickly escape from the active material layer, thereby quickly forming uniform pores on the active material layer. When the pore-forming agent is formic acid, a gas, such as carbon dioxide, can be generated by electrically energizing the active material layer. The carbon dioxide can quickly escape from the active material layer, thereby quickly forming uniform pores on the active material layer, improving the pore-forming efficiency of the electrode, and enabling, when the electrode is used in a battery, the battery to have relatively high manufacturing efficiency.

According to some embodiments of the present application, a mass proportion of the pore-forming agent in the slurry is A, satisfying 0.00001≤A≤0.2.

In the above solutions, the mass proportion A of the pore-forming agent in the slurry is defined to be greater than or equal to 0.00001, thereby improving the number of pores on the active material layer, so that the electrode has a large specific surface area, which is conducive to improving the reaction rate of the electrode; and the mass proportion A of the pore-forming agent in the slurry is defined to be less than or equal to 0.2, thereby effectively reducing the waste of space in the active material layer caused by the finally formed pores due to arrangement of too much pore-forming agent, affecting the amount of the active material, and affecting the volumetric energy density. When 0.00001 mm≤A≤2 mm, the reaction rate and volumetric energy density of the electrode can be effectively balanced.

According to some embodiments of the present application, the pore-forming agent is a solid with a median particle size D50 of the pore-forming agent satisfying 0.001 mm≤D50≤6 mm.

In the above solutions, the median particle size D50 of the pore-forming agent is defined to be greater than or equal to 0.001 mm, thereby improving the size of the pores on the active material layer, which is conductive to improving the reaction rate of the electrode; and the median particle size D50 of the pore-forming agent is defined to be less than or equal to 6 mm, thereby effectively reducing the waste of space in the active material layer caused by excessively large finally formed pores due to arrangement of excessively large pore-forming agent, affecting the amount of the active material, and affecting the volumetric energy density. When 0.001 mm≤D50≤6 mm, the reaction rate and volumetric energy density of the electrode can be effectively balanced.

According to some embodiments of the present application, the median particle size D50 of the pore-forming agent satisfies 0.002 mm≤D50≤5 mm.

In the above solutions, the median particle size D50 of the pore-forming agent is defined to be greater than or equal to 0.002 mm, thereby further improving the size of the pores on the active material layer, which is further conductive to improving the reaction rate of the electrode; and the median particle size D50 of the pore-forming agent is defined to be less than or equal to 5 mm, thereby more effectively reducing the waste of space in the active material layer caused by excessively large finally formed pores due to arrangement of excessively large pore-forming agent, affecting the amount of the active material, and affecting the volumetric energy density. When 0.002 mm≤D50≤5 mm, the reaction rate and volumetric energy density of the electrode can be further balanced.

According to some embodiments of the present application, the step of providing the slurry further comprises mixing the slurry with a surfactant.

In the above solutions, the slurry is mixed with the surfactant, which is conductive to promoting the escape of gas generated by the electrochemical reaction of the pore-forming agent, and improving the pore formation efficiency, thereby improving the pore-forming efficiency of the electrode, and enabling, when the electrode is used in a battery, the battery to have relatively high manufacturing efficiency.

According to some embodiments of the present application, before the step of electrically energizing the active material layer, the method further comprises a step of: drying the active material layer; or, after the step of electrically energizing the active material layer, the method further comprises a step of: drying the active material layer.

In the above solutions, two sequential solutions are provided for electrically energizing the active material layer and drying the active material layer, to provide multiple choices for the electrode manufacturing. For example, in some embodiments, the active material layer can be electrically energized before the drying the active material layer; and in some other embodiments, the active material layer can be electrically energized after the drying the active material layer.

According to some embodiments of the present application, the step of electrically energizing the active material layer comprises: forming the pores with a pore size of D, satisfying 0.001 mm≤D≤5 mm.

In the above solutions, the pore size D of the pores is defined to be greater than or equal to 0.001 mm, which is conductive to the ion diffusion rate, thereby accelerating the reaction rate of the electrode; and the pore size D of the pores is defined to be less than or equal to 5 mm, thereby effectively reducing the waste of space in the active material layer caused by excessively large pores, affecting the amount of the active material, and affecting the volumetric energy density. When 0.001 mm≤D≤5 mm, the reaction rate and volumetric energy density of the electrode can be effectively balanced.

According to some embodiments of the present application, the step of electrically energizing the active material layer comprises: forming the pores with a spacing L between any two adjacent pores thereamong satisfying 0.01 mm≤L≤10.5 mm.

In the above solutions, the spacing L between any two adjacent pores is defined to be greater than or equal to 0.01 mm, which is conductive to the structural stability of the active material layer, reducing the risk of collapse of the active material layer, and enabling the electrode to have high reliability; and the spacing L between any two adjacent pores is defined to be less than or equal to 10.5 mm, thereby effectively reducing the waste of space in the active material layer caused by excessively large spacing between two adjacent pores, affecting the amount of the active material, and affecting the volumetric energy density. When 0.01 mm≤L≤10.5 mm, the reliability and volumetric energy density of the electrode can be effectively balanced.

According to some embodiments of the present application, the current collector comprises an empty foil region and a coating region, and along a width direction of the current collector, the empty foil region is arranged on either side of the coating region respectively. The number of the conductive members is two, and the two conductive members are spaced apart along the width direction of the current collector, to contact with the corresponding empty foil regions respectively.

In the above solutions, the number of conductive members is configured as two to correspond to the two empty foil regions, so that the current can effectively act on the active material layer, and the pore-forming agent in the active material layer is efficiently caused to undergo an electrochemical reaction, thereby allowing the active material layer to efficiently form pores, improving the pore-forming efficiency of the electrode, and enabling, when the electrode is used in a battery, the battery to have relatively high manufacturing efficiency.

According to some embodiments of the present application, along the width direction of the current collector, the two conductive members are configured to be positionally adjustable on the roller.

In the above solutions, the conductive members are arranged to be positionally adjustable along the width direction of the current collector, so that the conductive members can act on current collectors of different specifications to manufacture porous electrodes of different specifications, thereby reducing the impact of wasting manufacturing labor-hours due to roller replacement to adapt to the current collectors of different specifications, and facilitating improving the electrode manufacturing efficiency.

According to some embodiments of the present application, along the width direction of the current collector, dimension of the conductive member is d, and dimension of the roller is W, satisfying 0.001<d/W<0.5.

In the above solutions, a ratio d/W of the dimension d of the conductive member along the width direction of the current collector to the dimension D of the roller along the width direction of the current collector is defined to be greater than or equal to 0.001, to effectively electrically connect the conductive member to the empty foil region, which is conductive to improving the efficiency of the electrochemical reaction of the pore-forming agent and is conductive to improving the pore formation efficiency; and the ratio d/W of the dimension d of the conductive member along the width direction of the current collector to the dimension D of the roller along the width direction of the current collector is defined to be less than or equal to 0.5, thereby effectively reducing the interference between the conductive member and the active material layer, avoiding wrinkles in the active material layer, reducing the electrode defective rate, and effectively balancing, when 0.001<d/W<0.5, the pore formation efficiency of the electrode and the yield rate of the electrode.

According to some embodiments of the present application, the conductive member is connected to a potential controller, and the potential controller is connected to a reference electrode.

In the above solutions, the potential controller and the reference electrode are arranged, thereby effectively controlling voltage intensity applied to the active material layer, and effectively controlling the efficiency, type and degree of the electrochemical reaction of the pore-forming agent, which is conductive to improving the pore formation efficiency.

In a second aspect, some embodiments of the present application provide a battery, comprising an electrode assembly, wherein the electrode assembly comprises a first electrode, a second electrode, and a separator, the first electrode and the second electrode have opposite polarities, and the separator is arranged between the first electrode and the second electrode. The first electrode and/or the second electrode are obtained using the electrode manufacturing method in the first aspect.

In a third aspect, the present application provides an electrical apparatus, comprising the battery provided in the second aspect, wherein the battery is configured to provide electrical energy.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be viewed as limiting the scope of the present application. For those of ordinary skills in the art, other relevant drawings may also be obtained based on these drawings without creative work.
FIG. 1 is a schematic diagram of a vehicle in some embodiments of the present application;
FIG. 2 is an exploded view of a battery in some embodiments of the present application;
FIG. 3 is a schematic diagram of a local structure of an electrode assembly in some embodiments of the present application;
FIG. 4 is a flow block of an electrode manufacturing method in some embodiments of the present application;
FIG. 5 is a flow block of an electrode manufacturing method in some other embodiments of the present application;
FIG. 6 is a flow block of an electrode manufacturing method in some other embodiments of the present application;
FIG. 7 is a schematic diagram of a current collector and an active material layer in some embodiments of the present application;
FIG. 8 is a schematic diagram of an electrode manufacturing device in some embodiments of the present application;
FIG. 9 is a schematic diagram of a current collector and an active material layer in some embodiments of the present application; and
FIG. 10 is a schematic diagram of a roller in some embodiments of the present application.

Icons: 100-battery; 10-shell; 11-case; 12-end cover; 120-electrode terminal; 121-liquid injection hole; 20-electrode assembly; 21-first electrode; 22-second electrode; 23-separator; 24-current collector; 240-empty foil region; 241-coating region; 25-active material layer; 26-pore; 30-roller; 31-conductive member; 40-belt pulley; 50-potential controller; 51-reference electrode; x-width direction of current collector; 2000-electrode manufacturing method; 1000-vehicle; 200-controller; 300-motor.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of' is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the description of the embodiments of the present application, the term "and/or" is simply a description of an association relationship of associated objects, which indicates that there may exist three relationships, for example, C and/or B may mean: the presence of C, the presence of both C and B, and the presence of B. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skills in the art, the specific meanings of the above terms in the embodiments of the present application can be understood based on specific situations.

In the present application, the battery may comprise, e.g., a lithium-ion secondary battery, a lithium-ion primary battery, a lithium-sulfur battery, or a sodium/lithium-ion battery, a sodium-ion battery, or a magnesium-ion battery, which is not limited in the embodiments of the present application. The battery may be, e.g., a rectangular solid or other shape, which is not limited in the embodiments of the present application.

The battery comprises an electrode assembly and an electrolyte solution. The electrode assembly is composed of electrodes and a separator. The electrodes include a positive electrode and a negative electrode with opposite polarities. The battery works mainly relying on movement (such as deintercalation) of metal ions between the positive and negative electrodes. Each of the electrodes may comprise a current collector and an active material layer. As an example, the positive electrode comprises a positive electrode current collector and a positive electrode active material layer. The positive electrode active material layer is coated on a surface of the positive electrode current collector. The positive electrode current collector that is not coated with the positive electrode active material layer protrudes from the positive electrode current collector that is coated with the positive electrode active material layer. The positive electrode current collector that is not coated with the positive electrode active material layer serves as a positive tab. Taking a lithium-ion battery as an example, the material of the positive electrode current collector may be aluminum, and a positive electrode active material may be, e.g., lithium cobalt oxide, lithium iron phosphate, ternary lithium, or lithium manganate. The negative electrode comprises a negative electrode current collector and a negative electrode active material layer, a surface of the negative electrode current collector is coated with the negative electrode active material layer, the negative electrode current collector that is not coated with the negative electrode active material layer protrudes from the negative electrode current collector that is coated with the negative electrode active material layer, and the negative electrode current collector that is not coated with the negative electrode active material layer serves as a negative tab. The material of the negative electrode current collector may be copper, and the negative electrode active material may be, e.g., carbon or silicon. The material of the separator may be, e.g., PP (polypropylene) or PE (polyethylene). In addition, the electrode assembly may be a winded structure or a stacked structure, which is not limited in the embodiments of the present application.

In an electrochemical reaction, such as a charge-discharge process of the battery, pores of the electrode are all very important parameters. Increasing the porosity of the electrode is conductive to increasing a reaction area between the electrode and a reactant, thereby accelerating the electrochemical reaction rate, promoting the diffusion rate of the material/ions, and accelerating the electrical reaction rate. For this reason, in order to improve the battery performance, the electrodes often have porous structures, that is, pores are formed on the active material layers of the electrodes.

For the development of battery technologies, various design factors should be considered, such as energy density, cycle life, discharge capacity, charging-discharging rate, and other performance parameters. In addition, the battery manufacturing efficiency should also be considered.

At present, in the electrode manufacturing method, a dried electrode is often placed in a polar solvent, and pores are formed on the electrode by removing a pore-forming agent through solvent extraction. However, a contact area between the electrode and the solvent and the extraction time affect the pore formation efficiency, thereby resulting in low pore-forming efficiency of the electrode, and affecting the battery manufacturing efficiency.

In view of this, in order to improve the pore formation efficiency and then improve the battery manufacturing efficiency, some embodiments of the present application provide an electrode manufacturing method, comprising the steps of:
providing a slurry mixed with a pore-forming agent;
coating the slurry on a current collector to form an active material layer on the current collector; and
electrically energizing the active material layer to cause the pore-forming agent in the active material layer to undergo an electrochemical reaction to form pores.

Some embodiments of the present application provide an electrode manufacturing method, wherein a pore-forming agent that is caused to undergo an electrochemical reaction due to electrical energization is added to a slurry, and after the slurry mixed with the pore-forming agent is coated on a current collector to form an active material layer, the active material layer is electrically energized to cause the pore-forming agent to undergo the electrochemical reaction, so that an escapable gas that is generated due to the electrochemical reaction of the pore-forming agent or a substance that is separable from the active material layer and is generated due to the electrochemical reaction can be removed, and so that the active material layer efficiently forms uniform and dense pores, thereby improving the pore-forming efficiency of the electrode, and enabling, when the electrode is used in a battery, the battery to have relatively high manufacturing efficiency.

The technical solutions described in the embodiments of the present application are suitable for electrode manufacturing. The electrode manufactured using the electrode manufacturing method described in the embodiments of the present application can be used in a battery or other devices using the electrode due to the need for an electrochemical reaction, such as an electrolytic cell and an electrochemical sensor. The technical solutions described in the embodiments of the present application are applicable to an electrical apparatus using a battery with the electrode.

The electrical apparatus may be, e.g., a vehicle, a mobile phone, a portable device, a laptop, a ship, a spacecraft, an electric toy, and an electric tool. The vehicle may be a new energy vehicle. The new energy vehicle may be an all-electric vehicle, a hybrid electric vehicle, an extended-range electric vehicle, or the like. The spacecraft includes a plane, a rocket, a space shuttle, a spaceship, and the like. The electric toy includes a stationary or mobile electric toy, such as a game console, an electric car toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer. The above electrical apparatus is not particularly limited in the embodiments of the present application.

For ease of description, the following embodiments are illustrated when the electrical apparatus is, for example, a vehicle.

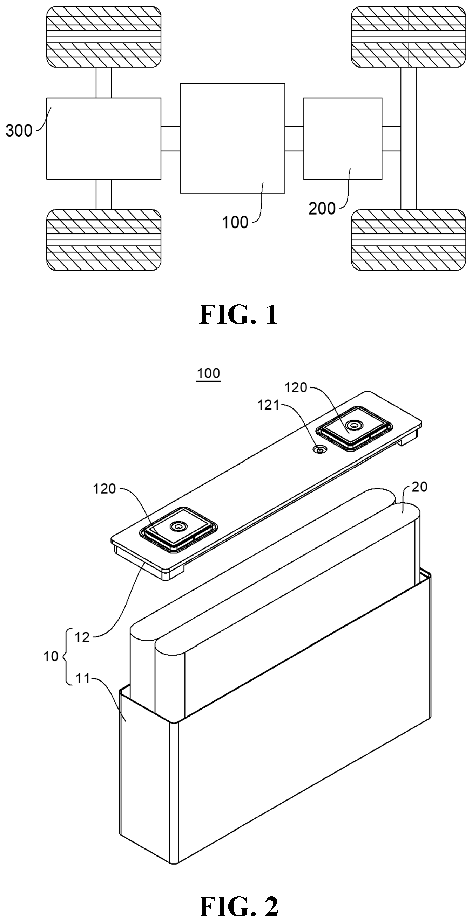

FIG. 1 is a schematic diagram of a vehicle in some embodiments of the present application.

A controller 200, a motor 300, and a battery 100 may be provided inside the vehicle 1000. The controller 200 is configured to control the battery 100 to power the motor 300. For example, the battery 100 may be provided at the bottom, vehicle head, or vehicle rear of the vehicle 1000. The battery 100 may be configured to power the vehicle 1000. For example, the battery 100 may serve as an operating power source for the vehicle 1000 for a circuit system of the vehicle 1000, for example, for the working power requirements of the vehicle 1000 during startup, navigation, and running. In another embodiment of the present application, the battery 100 not only can serve as an operating power source of the vehicle 1000, but also can serve as a driving power source of the vehicle 1000, to provide driving power for the vehicle 1000 in place of or partially in place of fuel or natural gas.

In some embodiments, one or more batteries 100 may be a partial structure of a battery 100 pack. The battery 100 pack may comprise a single physical module including one or more batteries 100 to provide higher voltage and capacity. The battery 100 pack generally comprises a box body configured to encapsulate one or more batteries 100. The box body can prevent liquid or other foreign matters from affecting charging or discharging of the battery 100.

Referring to FIG. 2, FIG. 2 is an exploded view of a battery 100 in some embodiments of the present application. The battery 100 comprises a shell 10 and an electrode assembly 20 accommodated in the shell 10.

The shell 10 comprises a case 11 and an end cover 12. The case 11 has an accommodating cavity. The case 11 has an opening, so that the electrode assembly 20 can be accommodated in the accommodating cavity of the case 11. The end cover 12 is configured to close the opening of the case 11. The end cover 12 may be arranged on the electrode terminal 120 for electrical connection to a tab of the electrode assembly 20, to charge and discharge the battery 100 cell. After the electrode assembly 20 is accommodated in the shell 10, an electrolyte solution may be injected into the accommodating cavity through a liquid injection hole 121 arranged on the end cover 12.

Shape of the shell 10 depends on combined shape of one or more electrode assemblies 20. For example, the shell 10 may be a hollow rectangular solid, a hollow cube, or a hollow cylinder. In some embodiments of the present application, the shell 10 may be made of a conductive metal material, such as aluminum or an aluminum alloy. The shell 10 may also be made of plastic.

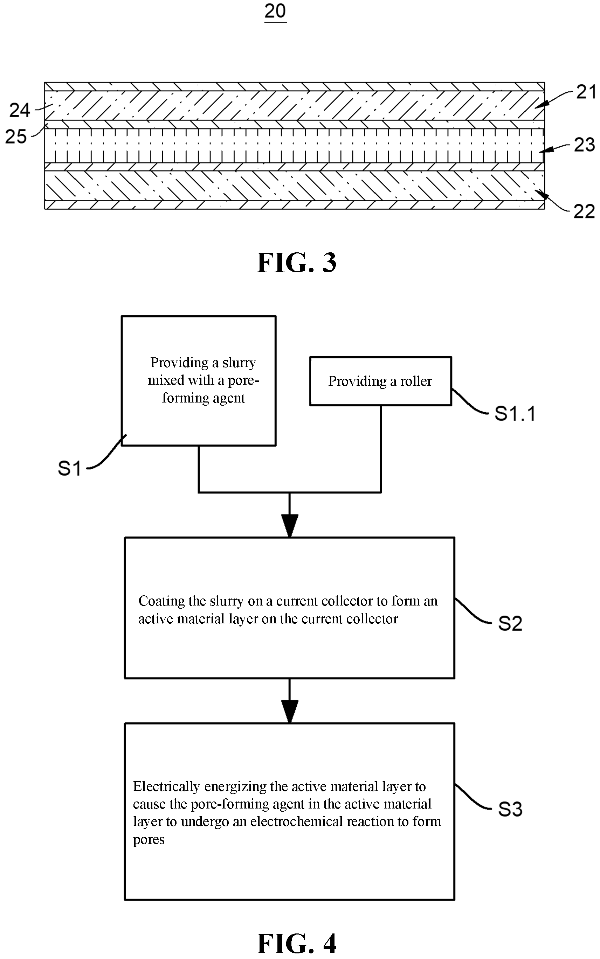

As shown in FIG. 3, FIG. 3 is a schematic diagram of a local structure of an electrode assembly 20 in some embodiments of the present application. The electrode assembly 20 may comprise electrodes and a separator 23. The electrodes include a positive electrode 21 and a negative electrode 22 with opposite polarities. The separator 23 is arranged between the first electrode 21 and the second electrode 22. The first electrode 21 may be a positive electrode, and the second electrode 22 may be a negative electrode. The electrode may comprise a current collector 24 and an active material layer 25 arranged on the current collector 24. The active material layer 25 may be formed by coating a slurry containing an active material on a surface of the current collector 24.

According to some embodiments of the present application, an electrode manufacturing method 2000 is provided. Referring to FIG. 4, FIG. 4 is a flow block of an electrode manufacturing method in some embodiments of the present application.

The electrode manufacturing method comprises steps of:
S1: providing a slurry mixed with a pore-forming agent;
S2: coating the slurry on a current collector to form an active material layer on the current collector; and
S3: electrically energizing the active material layer to cause the pore-forming agent in the active material layer to undergo an electrochemical reaction to form pores.

In some embodiments, the "slurry" may be an active material slurry, which may comprise, e.g., an active material, a conductive agent, a binder, and a solvent. As an example, for a positive electrode, the active material may comprise, e.g., lithium cobalt oxide, lithium manganate, lithium iron phosphate, and a ternary material, the conductive agent may comprise, e.g., carbon black, carbon nanotube, and conductive graphite, the binder comprises a water-based or oil-based binder, and the solvent may comprise corresponding water-based deionized water and a corresponding oil-based NMP solvent. For a negative electrode, the active material may comprise various types of graphite and a silicon-carbon negative electrode, the conductive agent may comprise, e.g., carbon black, carbon nanotube, and conductive graphite, the binder comprises a water-based or oil-based binder, and the solvent may comprise corresponding water-based deionized water and a corresponding oil-based NMP solvent.

In some embodiments, when the battery 100 is manufactured, a slurry may be coated on the current collector 24 in a coating process, and the slurry coated on the current collector 24 forms the active material layer 25.

"The slurry mixed with the pore-forming agent" can be understood as that the pore-forming agent is mixed into the slurry. As an example, in the process of stirring the active material, the conductive agent, the binder, and the solvent to form the slurry, a certain amount of the pore-forming agent may be put into the stirring container, to fully mix the pore-forming agent in the slurry. The pore-forming agent may be a substance used to form pores 26 in the active material layer 25. In some embodiments, the pore-forming agent may be electrically energized to be caused to undergo an electrochemical reaction, which will cause to form the pores 26 on the active material layer 25. As an example, the pore-forming agent is electrically energized, so that the pore-forming agent is caused to undergo an electrochemical reaction, and the product thereof may be an escapable gas (such as carbon dioxide, hydrogen, or oxygen) to form the pores 26 on the active material layer 25; or the product thereof may be a magnetic and non-conductive substance (such as γ'-Fe4N magnetic nanomaterial, which can be found in Literature "Research and Application of Transition Metal-Doped γ'-Fe4N Magnetic Nanomaterials", Shandong University), the substance can be taken away by a strong magnetic field to form the pores 26 on the active material layer 25, or the product may be a substance that can be dissolved in a particular solution, and after the product is dissolved in the particular solution, the pores 26 can be formed on the active material layer 25.

The "electrically energizing the active material layer" can be understood as that the active material layer 25 can be directly electrically energized, for example, by inserting an electrically energized electrode into the active material layer 25, or indirectly electrically energizing the active material layer 25, such as powering the current collector 24, thereby electrically energizing the active material layer 25.

In some embodiments, a magnitude of a voltage applied to the active material layer 25 can be controlled, thereby not only satisfying the reaction requirements for the electrochemical reaction of the pore-forming agent, but also controlling the reaction rate of the electrochemical reaction of the pore-forming agent in the active material layer 25.

Some embodiments of the present application provide an electrode manufacturing method, wherein a pore-forming agent that is caused to undergo an electrochemical reaction due to electrical energization is added to a slurry, and after the slurry mixed with the pore-forming agent is coated on a current collector 24 to form an active material layer 25, the active material layer 25 is electrically energized to cause the pore-forming agent to undergo the electrochemical reaction, so that an escapable gas that is generated due to the electrochemical reaction of the pore-forming agent or a substance that is separable from the active material layer 25 and is generated due to the electrochemical reaction can be removed, and so that the active material layer 25 efficiently forms uniform and dense pores 26, thereby not only accurately controlling, by controlling the magnitude and other parameter data of the current, the formation and appearance of the pores 26 of the active material layer 25, but also improving the pore-forming efficiency of the electrode, and improving, when the electrode is used in a battery 100, the manufacturing efficiency of the battery 100.

In some embodiments, with the electrode manufacturing method 2000 described above, the resulting electrode not only can be used in a battery, for example, two electrodes with opposite polarities are arranged in conjunction with a separator to form an electrode assembly of the battery, but also can be used in an electrochemical reaction scenario involved in electrolytic industry, electrocatalysis, electrochemical analysis, and other porous electrodes.

According to some embodiments of the present application, the pore-forming agent is configured as a substance that is electrically energized to produce a gas.

"The pore-forming agent is configured as a substance that is electrically energized to produce a gas," which can be understood as that after a current of a certain voltage magnitude is applied to the active material layer 25, the pore-forming agent in the active material layer 25 can be caused to undergo an electrochemical reaction, thereby directly or indirectly producing the gas, and forming the pores 26 on the active material layer 25 through the escape of the gas flow.

In the above solutions, the pore-forming agent is defined as a substance that can generate a gas after being electrically energized, so that after the active material layer 25 is electrically energized, the gas produced due to the electrochemical reaction can escape from the active material layer 25, thereby efficiently forming uniform pores 26 on the active material layer 25, improving the pore-forming efficiency of the electrode, and enabling, when the electrode is used in the battery 100, the battery 100 to have relatively high manufacturing efficiency.

According to some embodiments of the present application, the pore-forming agent comprises at least one of water, methanol, ethanol, formic acid, or ammonium carbamate.

In some embodiments, the pore-forming agent may be one of water, methanol, ethanol, formic acid, or ammonium carbamate.

In some other embodiments, the pore-forming agent may be any two of methanol, ethanol, formic acid, or ammonium carbamate. In some other embodiments, the pore-forming agent may be any three of methanol, ethanol, formic acid, or ammonium carbamate. In some other embodiments, the pore-forming agent may be methanol, ethanol, formic acid, and ammonium carbamate.

In the above solutions, when the pore-forming agent is water, oxygen and hydrogen can be generated by electrically energizing the active material layer 25, and quickly escape from the active material layer 25, thus quickly forming uniform pores 26 in the active material layer 25. When the pore-forming agent is methanol, a gas, such as carbon dioxide, can be generated by electrically energizing the active material layer 25. The carbon dioxide quickly escapes from the active material layer 25, thereby quickly forming uniform pores 26 in the active material layer 25. When the pore-forming agent is ethanol, gases, such as carbon dioxide and methane, can be generated by electrically energizing the active material layer 25. The carbon dioxide and methane can quickly escape from the active material layer 25, thereby quickly forming uniform pores 26 in the active material layer 25. When the pore-forming agent is formic acid, a gas, such as carbon dioxide, can be generated by electrically energizing the active material layer 25. The carbon dioxide can quickly escape from the active material layer 25, thereby quickly forming uniform pores 26 in the active material layer 25; and when the pore-forming agent is ammonium carbamate, ammonium and carbon dioxide can be generated by electrically energizing the active material layer 25, quickly escape from the active material layer 25, and can quickly form uniform pores 26 in the active material layer 25, thereby enabling, when the electrode is used in a battery 100, the battery 100 to have relatively high manufacturing efficiency.

In some other embodiments, type of the pore-forming agent is not specifically limited, as long as it can be electrically energized to form the pores 26 in the active material layer 25.

According to some embodiments of the present application, a mass proportion of the pore-forming agent in the slurry is A, satisfying 0.00001≤A≤0.2.

The mass proportion of the pore-forming agent in the slurry is A, which can be understood as a ratio of the mass of the pore-forming agent to the total mass of the slurry and the pore-forming agent in a same unit. In some embodiments, the value of A may be 0.00001, 0.00002, 0.00003, 0.00004, ..., 0.008, 0.009, 0.01, 0.011, 0.012, 0.013, 0.014, 0.015, 0.016, 0.017, 0.018, 0.019, 0.2, or any value between two adjacent values.

In the above solutions, the mass proportion A of the pore-forming agent in the slurry is defined to be greater than or equal to 0.00001, thereby improving the number of pores 26 in the active material layer 25, so that the electrode has a large specific surface area, which is conducive to improving the reaction rate of the electrode; and the mass proportion A of the pore-forming agent in the slurry is defined to be less than or equal to 0.2, thereby effectively reducing the waste of space in the active material layer 25 caused by the finally formed pores 26 due to arrangement of too much pore-forming agent, affecting the amount of the active material, and affecting the volumetric energy density. When 0.00001 mm≤A≤2 mm, the reaction rate and volumetric energy density of the electrode can be effectively balanced.

According to some embodiments of the present application, the pore-forming agent is a solid with a median particle size D50 of the pore-forming agent satisfying 0.001 mm≤D50≤6 mm.

In some embodiments, the pore-forming agent may be a solid particle. The particle size of the pore-forming agent may affect size of the finally formed pores 26. As an example, the pore-forming agent may be ammonium carbamate.

The median particle size D50 can be understood as a corresponding particle size when cumulative particle size distribution percentage of a sample reaches 50%. Its physical meaning is that 50% of particles have a particle size larger than it, and 50% of the particles have a particle size smaller than it. The median particle size D50 may be detected by various methods, such as sieving, sedimentation, electrical resistance, laser, and electron microscopy.

In some embodiments, the value of the median particle size D50 of the pore-forming agent may be 0.001 mm, 0.002 mm, 0.003 mm, 0.004 mm, 0.005 mm, 0.006 mm, ..., 5.7 mm, 5.8 mm, 5.9 mm, 6 mm, or any value between two adjacent values.

In the above solutions, the median particle size D50 of the pore-forming agent is defined to be greater than or equal to 0.001 mm, thereby improving the size of the pores 26 in the active material layer 25, which is conductive to improving the reaction rate of the electrode; and the median particle size D50 of the pore-forming agent is defined to be less than or equal to 6 mm, thereby effectively reducing the waste of space in the active material layer 25 caused by excessively large finally formed pores 26 due to arrangement of excessively large pore-forming agent, affecting the amount of the active material, and affecting the volumetric energy density. When 0.001 mm≤D50≤6 mm, the reaction rate and volumetric energy density of the electrode can be effectively balanced.

In some other embodiments, the pore-forming agent may be a liquid or a mixture of solid and liquid.

According to some embodiments of the present application, the median particle size D50 of the pore-forming agent satisfies 0.002 mm≤D50≤5 mm.

In some embodiments, the value of the median particle size D50 of the pore-forming agent may be 0.002 mm, 0.003 mm, 0.004 mm, 0.005 mm, 0.006 mm, ..., 4.7 mm, 4.8 mm, 4.9 mm, 5 mm, or any value between two adjacent values.

In the above solutions, the median particle size D50 of the pore-forming agent is defined to be greater than or equal to 0.002 mm, thereby further improving the size of the pores 26 in the active material layer 25, which is further conductive to improving the reaction rate of the electrode; and the median particle size D50 of the pore-forming agent is defined to be less than or equal to 5 mm, thereby more effectively reducing the waste of space in the active material layer 25 caused by excessively large finally formed pores 26 due to arrangement of excessively large pore-forming agent, affecting the amount of the active material, and affecting the volumetric energy density. When 0.002 mm≤D50≤5 mm, the reaction rate and volumetric energy density of the electrode can be further balanced.

According to some embodiments of the present application, the step of providing the slurry further comprises mixing the slurry with a surfactant.

"The slurry mixed with the surfactant" can be understood as that the surfactant is mixed into the slurry. As an example, in the process of stirring the active material, the conductive agent, the binder, and the solvent to form the slurry, a certain amount of the pore-forming agent and the surfactant may be put into the stirring container, to fully mix the pore-forming agent and the surfactant in the slurry.

The surfactant can be understood as an interfacial agent, and is a compound that can significantly reduce the surface tension or interfacial tension between two liquids, liquid-gas, or liquid-solid. As an example, the surfactant may be sodium lauryl sulfate.

As an example, the pore-forming agent may comprise methanol. Methanol will be caused to undergo a reaction after being electrically energized to generate carbon dioxide. The pore-forming agent is provided to promote the escape of carbon dioxide.

In the above solutions, the slurry is mixed with the surfactant, which is conductive to promoting the escape of gas generated by the electrochemical reaction of the pore-forming agent, and improving the formation efficiency of the pores 26, thereby improving the pore-forming efficiency of the electrode, and improving, when the electrode is used in a battery 100, the manufacturing efficiency of the battery 100.

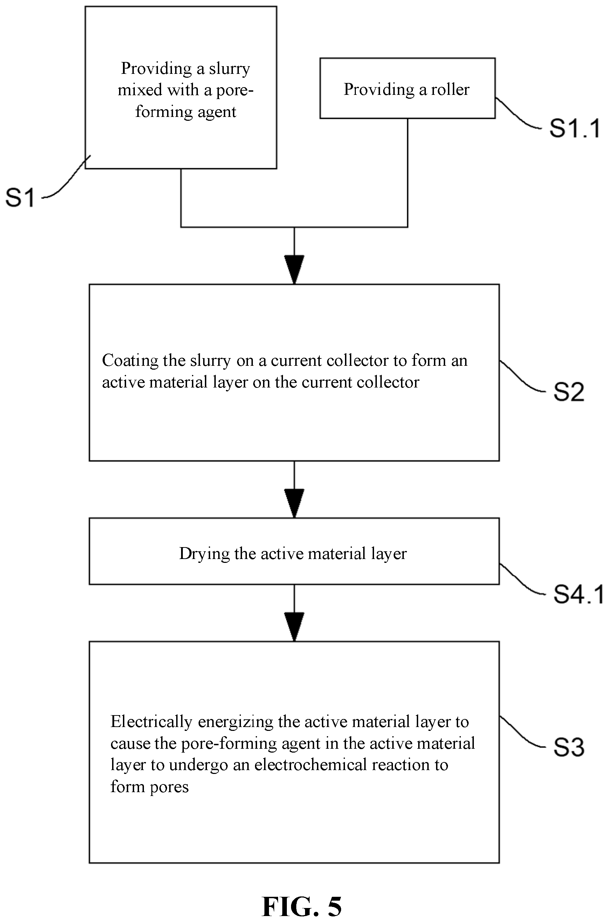

According to some embodiments of the present application, referring to FIG. 5, FIG. 5 is a flow block of an electrode manufacturing method 2000 in some other embodiments of the present application. Before the step S3 of electrically energizing the active material layer, the method further comprises steps of:
S4.1: drying the active material layer.

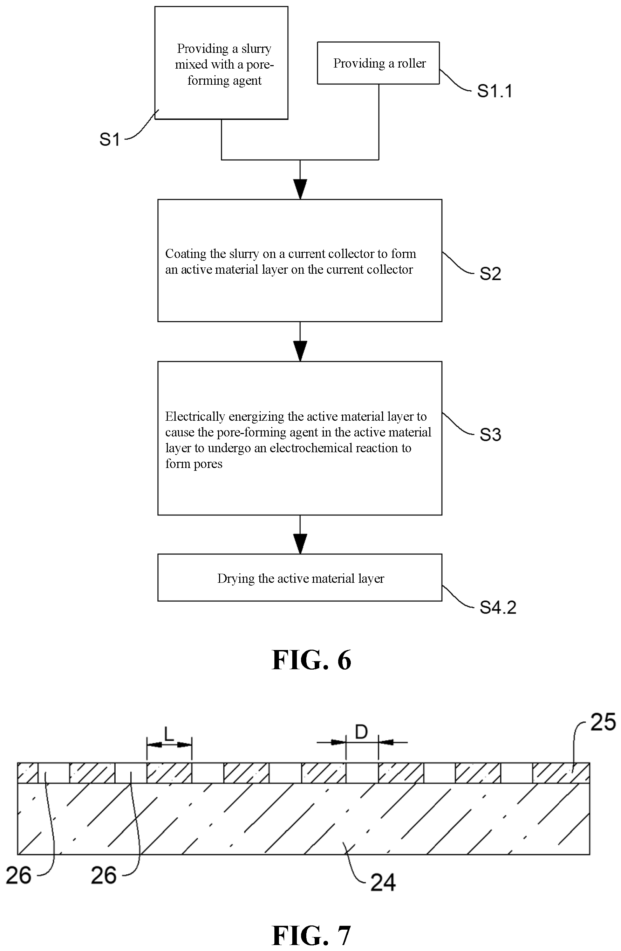

Or, in some other embodiments of the present application, referring to FIG. 6, FIG. 6 is a flow block of an electrode manufacturing method 2000 in some other embodiments of the present application.

After the step S3 of electrically energizing the active material layer, the method further comprises:
S4.2: drying the active material layer.

In some embodiments, the active material layer 25 located on a surface of the current collector 24 can be dried via a drying apparatus.

In some embodiments, before the drying the active material layer 25, the active material layer 25 is electrically energized to form the pores 26, and then the active material layer 25 with the formed pores 26 is electrically energized. In some other embodiments, before the drying the active material layer 25, the active material layer 25 is electrically energized to form the pores 26.

As an example, the pore-forming agent comprises methanol, and the electrode manufacturing method comprises:
S1: providing a slurry mixed with a pore-forming agent; wherein in the step S1, the slurry is mixed with methanol and a surfactant.
S2: coating the slurry on a current collector to form an active material layer on the current collector.
S3: electrically energizing the active material layer to cause the pore-forming agent in the active material layer to undergo an electrochemical reaction to form pores.
S4.2: drying the active material layer.

As another example, the pore-forming agent comprises ammonium carbamate, and the electrode manufacturing method comprises:
S1: providing a slurry mixed with a pore-forming agent;
S2: coating the slurry on a current collector to form an active material layer on the current collector;
S4.1: drying the active material layer; and
S3: electrically energizing the active material layer to cause the pore-forming agent in the active material layer to undergo an electrochemical reaction to form pores.

In the above solutions, two sequential solutions are provided for electrically energizing the active material layer 25 and drying the active material layer 25, to provide multiple choices for the electrode manufacturing. For example, in some embodiments, the active material layer 25 can be electrically energized before the drying the active material layer 25; and in some other embodiments, the active material layer 25 can be electrically energized after the drying the active material layer.

According to some embodiments of the present application, with reference to FIG. 7, FIG. 7 is a schematic diagram of a current collector 24 and an active material layer 25 in some embodiments of the present application. The current collector 24, the active material layer 25 and the pores 26 are shown in FIG. 7.

The step S3 of electrically energizing the active material layer 25 comprises: forming the pores with a pore size of D, satisfying 0.001 mm≤D≤5 mm.

In some embodiments, the measurement method of the pore size of the pores 26 includes, but is not limited to, gas adsorption or scanning electron microscope.

In some embodiments, after the electrically energizing the active material layer 25 through the step S3, the value of the pore size D of the pores 26 formed on the active material layer 25 may be 0.001 mm, 0.002 mm, 0.003 mm, 0.004 mm, ..., 4.7 mm, 4.8 mm, 4.9 mm, 5 mm, or any value between two adjacent values.

In some embodiments, the pores 26 on the active material layer 25 may be of different sizes, and the value of the pore size D of a smallest pore 26 is between 0.001 mm and 5 mm, or 0.001 mm, or less than 5 mm. The value of the pore size D of a largest pore 26 is between 0.001 mm and 5 mm, or greater than 0.001 mm, or 5 mm.

In the above solutions, the pore size D of the pores 26 is defined to be greater than or equal to 0.001 mm, which is conductive to the ion diffusion rate, thereby accelerating the reaction rate of the electrode; and the pore size D of the pores 26 is defined to be less than or equal to 5 mm, thereby effectively reducing the waste of space in the active material layer 25 caused by excessively large pores 26, affecting the amount of the active material, and affecting the volumetric energy density. When 0.001 mm≤D≤5 mm, the reaction rate and volumetric energy density of the electrode can be effectively balanced.

According to some embodiments of the present application, the step of electrically energizing the active material layer comprises: forming the pores with a spacing L between any two adjacent pores thereamong satisfying 0.01 mm≤L≤10.5 mm.

"The forming the pores with a spacing L between any two adjacent pores thereamong" can be understood as that a smallest spacing between any two adjacent pores 26 is L. In some embodiments, the value of L may be 0.01 mm, 0.02 mm, 0.03 mm, 0.04 mm, ..., 9 mm, 9.1 mm, 9.2 mm, 9.3 m, 9.4 mm, 9.5 mm, 9.6 mm, 9.7 mm, 9.8 mm, 9.9 mm, 10 mm, 10.1 mm, 10.2 mm, 10.3 mm, 10.4 mm, 10.5 mm, or any value between two adjacent values.

In the above solutions, the spacing L between any two adjacent pores 26 is defined to be greater than or equal to 0.01 mm, which is conductive to the structural stability of the active material layer 25, reducing the risk of collapse of the active material layer 25, and enabling the electrode to have high reliability; and the spacing L between any two adjacent pores 26 is defined to be less than or equal to 10.5 mm, thereby effectively reducing the waste of space in the active material layer 25 caused by excessively large spacing between two adjacent pores 26, affecting the amount of the active material, and affecting the volumetric energy density. When 0.01 mm≤L≤10.5 mm, the reliability and volumetric energy density of the electrode can be effectively balanced.

According to some embodiments of the present application, before the step S2 of coating the slurry on the current collector 24, the method further comprises:
Step S1.1: providing a roller.

The roller 30 is configured to coat and convey the current collector 24 and provided with a conductive member 31 on a surface of the roller 30, and the conductive member 31 is configured to electrically connect to the current collector 24. The step S3 of electrically energizing the active material layer 25 comprises electrically energizing the current collector 24 through the conductive member 31.

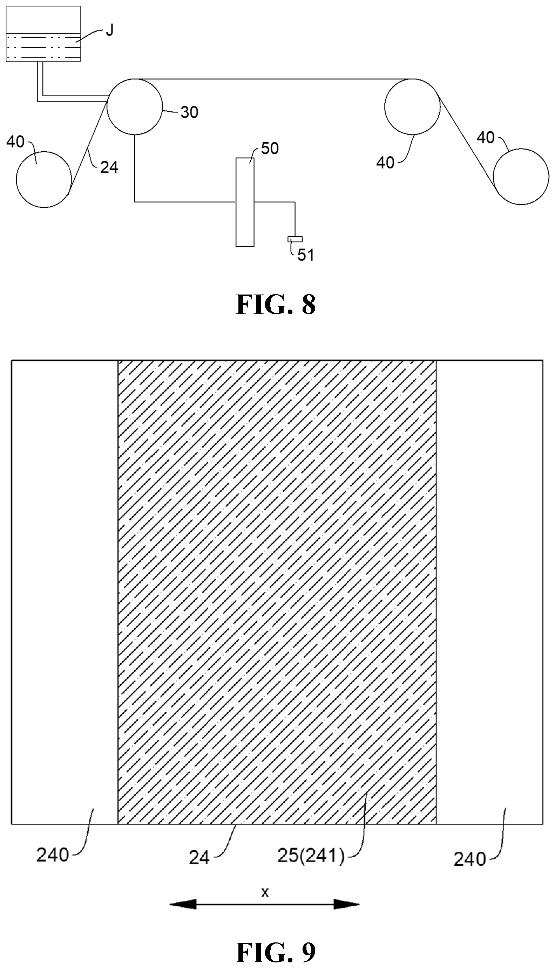

Referring to FIG. 8, FIG. 8 is a schematic diagram of an electrode manufacturing device in some embodiments of the present application. During the electrode manufacturing, the current collector 24 is conveyed through a belt conveying roller and the roller 30. During the conveying of the current collector 24, the slurry (the slurry is marked as J in FIG. 8) is coated on the current collector 24 through a coating device. In some embodiments, there are a plurality of belt pulleys 40, and the plurality of belt pulleys 40 are arranged at intervals along belt conveying direction of the current collector 24. The roller 30 is arranged on belt conveying path of the current collector 24. The roller 30 is provided with a conductive member 31, and the conductive member 31 is connected to an external power source. When the current collector 24 is conveyed on the roller 30 with the conductive member 31, the current collector 24 contacts with the conductive member 31, so that current can be transferred to the active material layer 25 through the conductive member 31 and the current collector 24.

In some embodiments, the conductive member 31 may be a conductive ring sleeved on a peripheral surface of the roller 30, and the conductive member 31 and the roller 30 may be relatively stationary or relatively rotatable. As an example, the conductive member 31 and the roller 30 may be relatively stationary, and the conductive member 31 may be connected with a wire. As another example, the conductive member 31 is rotatablely sleeved on the roller 30, and the conductive member 31 is connected with a wire. When the current collector 24 is conveyed, the roller 30 rotates and the conductive member 31 can remain stationary to effectively transmit the current.

In the above solutions, the conductive member 31 is arranged on the roller 30, so that the current can be conducted to the active material layer 25 when the current collector 24 is conveyed on the roller 30, thereby electrically energizing the active material layer 25, efficiently forming the pores 26 in the active material layer 25, and improving the manufacturing efficiency of the battery 100.

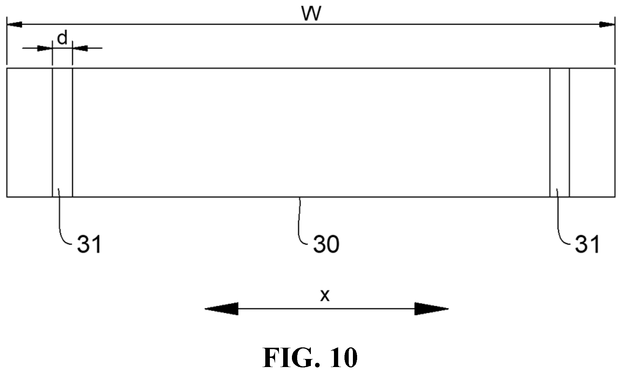

According to some embodiments of the present application, referring to FIGS. 9 and 10, FIG. 9 is a schematic diagram of a current collector 24 and an active material layer 25 in some embodiments of the present application, and FIG. 10 is a schematic diagram of a roller 30 in some embodiments of the present application.

The current collector 24 comprises an empty foil region 240 and a coating region 241, and along a width direction x of the current collector, the empty foil region 240 is arranged on either side of the coating region 241 respectively. The number of the conductive members 31 is two, and the two conductive members 31 are spaced apart along the width direction x of the current collector, to contact with the corresponding empty foil regions 240 respectively.

The coating region 241 may be a region where the slurry is coated on the current collector 24 to form the active material layer 25. The empty foil region 240 may be a region where the slurry is not coated on the current collector 24. In some embodiments, the coating region 241 is located between two empty foil regions 240 along the width direction x of the current collector.

The number of the conductive members 31 is two, and the conductive members 31 may be arranged corresponding to the empty foil regions 240, so that when the current collector 24 is supported on the roller 30, the conductive members 31 contact with the corresponding empty foil regions 240.

In some embodiments, material of the conductive member 31 may be, e.g., aluminum, copper, or an aluminum alloy. In some embodiments, the material of the conductive member 31 may be same as or different from material of the current collector 24.

In the above solutions, the number of the conductive members 31 is configured as two to correspond to the two empty foil regions 240, so that the current can effectively act on the active material layer 25, and the pore-forming agent in the active material layer 25 is efficiently caused to undergo an electrochemical reaction, thereby allowing the active material layer 25 to efficiently form pores 26, and improving, when the electrode is used in a battery 100, the manufacturing efficiency of the battery 100.

According to some embodiments of the present application, along the width direction x of the current collector, the two conductive members 31 are configured to be positionally adjustable on the roller 30.

In some embodiments, an operator can adjust position of the conductive member 31 to adapt to current collectors 24 of different specifications. As an example, when a production line is changed by replacing a small-sized current collector 24 with a large-sized current collector 24, and moving the empty foil region 240 outward. Accordingly, to make the conductive member 31 correspond to the outward moved empty foil region 240, the operator adjusts the position of the conductive member 31 by moving outward accordingly.

The width direction x of the current collector may be parallel to an axial direction of the roller 30.

In some embodiments, a sliding slot may be provided on the peripheral surface of the roller 30. The sliding slot extends along the width direction x of the current collector. The conductive member 31 is sleeved in the sliding slot. By sliding the conductive member 31, the conductive member 31 is positionally adjusted in the sliding slot. In some embodiments, the sliding slot is provided with a plurality of threaded holes at intervals along the width direction x of the current collector, and the conductive member 31 is connected to any one of the threaded holes through a thread.

In the above solutions, the conductive member 31 is arranged to be positionally adjustable along the width direction x of the current collector, so that the conductive member 31 can act on current collectors 24 of different specifications to manufacture porous electrodes of different specifications, thereby reducing the impact of wasting manufacturing labor-hours due to replacement of the roller 30 to adapt to the current collectors 24 of different specifications, and facilitating improving the manufacturing efficiency of the battery 100.

According to some embodiments of the present application, along the width direction x of the current collector, dimension of the conductive member 31 is d, and dimension of the roller 30 is D, satisfying 0.001<d/D<0.5.

In some embodiments, a ratio d/D of the dimension d of the conductive member 31 in the width direction x of the current collector to the dimension D of the roller 30 in the width direction x of the current collector may be 0.002, 0.003, 0.004, ..., 0.4, 0.41, 0.42, 0.43, 0.44, 0.45, 0.46, 0.47, 0.48, 0.49, or any value between two adjacent values, or any value between 0.001 and 0.002, or any value between 0.49 and 0.5.

In the above solutions, the ratio d/D of the dimension d of the conductive member 31 along the width direction x of the current collector to the dimension D of the roller 30 along the width direction x of the current collector is defined to be greater than or equal to 0.001, to effectively electrically connect the conductive member 31 to the empty foil region 240, which is conductive to improving the efficiency of the electrochemical reaction of the pore-forming agent and is conductive to improving the formation efficiency of the pores 26; and the ratio d/D of the dimension d of the conductive member 31 along the width direction x of the current collector to the dimension D of the roller 30 along the width direction x of the current collector is defined to be less than or equal to 0.5, thereby effectively reducing the interference between the conductive member 31 and the active material layer 25, avoiding wrinkles in the active material layer 25, resulting in the risk of reducing the yield of the electrode, and effectively balancing, when 0.001<d/D<0.5, the formation efficiency of the pores 26 of the electrode and the yield rate of the electrode.

According to some embodiments of the present application, the conductive member 31 is connected to a potential controller 50, and the potential controller 50 is connected to a reference electrode 51.

The reference electrode 51 may be an electrode used as a reference for comparison during measurement of various electrode potentials. In some embodiments, the reference electrode 51 includes, but is not limited to, a grounding electrode, a standard hydrogen electrode, or an Ag/AgCl electrode. The potential controller 50 is a device connected to the conductive member 31. The potential controller 50 may be connected to the conductive member 31 through a wire. The potential controller 50 is connected to the reference electrode 51, and can provide a current of a certain voltage to the conductive member 31 based on the reference electrode 51. As an example, in some embodiments of the present application, the voltage of the current applied to the conductive member 31 and the active material layer 25 by the potential controller 50 is between -500V and 500V compared to the reference electrode 51.

In the above solutions, the potential controller 50 and the reference electrode 51 are arranged, thereby effectively controlling voltage intensity applied to the active material layer 25, and effectively controlling the efficiency of the electrochemical reaction of the pore-forming agent, which is conductive to improving the formation efficiency of the pores 26.

Some embodiments of the present application further provide a battery 100, wherein the battery 100 comprises an electrode assembly 20, the electrode assembly 20 comprises a first electrode 21, a second electrode 22, and a separator 23, the first electrode 21 and the second electrode 22 have opposite polarities, and the separator 23 is arranged between the first electrode 21 and the second electrode 22. The first electrode 21 and/or the second electrode 22 are obtained using the electrode manufacturing method provided above.

In some embodiments, the shell 10 comprises a case 11 and an end cover 12. The case 11 has an accommodating cavity. The case 11 has an opening, so that the electrode assembly 20 can be accommodated in the accommodating cavity of the case 11. The end cover 12 is configured to close the opening of the case 11. The end cover 12 may be arranged on the electrode terminal for electrical connection to a tab of the electrode assembly 20, to charge and discharge the battery 100 cell. After the electrode assembly 20 is accommodated in the shell 10, an electrolyte solution may be injected into the accommodating cavity through a liquid injection hole arranged on the end cover 12.

Shape of the shell 10 depends on combined shape of one or more electrode assemblies 20. For example, the shell 10 may be a hollow rectangular solid, a hollow cube, or a hollow cylinder. In some embodiments of the present application, the shell 10 may be made of a conductive metal material, such as aluminum or an aluminum alloy. The shell 10 may also be made of plastic.

According to some embodiments of the present application, an electrical apparatus is provided, comprising the battery 100 provided above, wherein the battery 100 is configured to provide electrical energy.

According to some embodiments of the present application, referring to FIGS. 4-8, an electrode manufacturing method 2000 is provided, comprising the steps of:
S1: providing a slurry mixed with a pore-forming agent;
Step S1.1: providing a roller;
S2: coating the slurry on a current collector to form an active material layer on the current collector; and
S3: electrically energizing the active material layer to cause the pore-forming agent in the active material layer to undergo an electrochemical reaction to form pores.

In the step S1, the pore-forming agent may be a substance used to form pores 26 in the active material layer 25. In some embodiments, the pore-forming agent may be electrically energized to be caused to undergo an electrochemical reaction, which will cause to form the pores 26 on the active material layer 25. As an example, the pore-forming agent is electrically energized, so that the pore-forming agent is caused to undergo an electrochemical reaction, and the product thereof may be an escapable gas (such as carbon dioxide, hydrogen, or oxygen) to form the pores 26 on the active material layer 25; or the product thereof may be a magnetic and non-conductive substance (such as γ'-Fe4N magnetic nanomaterial, which can be found in Literature "Research and Application of Transition Metal-Doped γ'-Fe4N Magnetic Nanomaterials", Shandong University), the substance can be taken away by a strong magnetic field to form the pores 26 on the active material layer 25, or the product may be a substance that can be dissolved in a particular solution, and after the product is dissolved in the particular solution, the pores 26 can be formed on the active material layer 25.

In the step S1.1, a conductive member 31 is provided on a surface of the roller 30. The conductive member 31 is configured to electrically connect to the current collector 24, to electrically energize the active material layer 25 in the step S3. In some embodiments, the conductive member 31 is connected to a potential controller 50, and the potential controller 50 is connected to a reference electrode 51. The reference electrode 51 includes, but is not limited to, a grounding electrode, a standard hydrogen electrode, or an Ag/AgCl electrode.

In some embodiments, the electrode manufacturing method may further comprise a step of: drying the active material layer 25.

A pore-forming agent that is caused to undergo an electrochemical reaction due to electrical energization is added to a slurry, and after the slurry mixed with the pore-forming agent is coated on a current collector 24 to form an active material layer 25, the active material layer 25 is electrically energized to cause the pore-forming agent to undergo the electrochemical reaction, so that an escapable gas that is generated due to the electrochemical reaction of the pore-forming agent or a substance that is separable from the active material layer 25 and is generated due to the electrochemical reaction can be removed, and so that the active material layer 25 efficiently forms uniform and dense pores 26, thereby not only accurately controlling, by controlling the magnitude and other parameter data of the current, the formation and appearance of the pores 26 of the active material layer 25, but also improving the pore-forming efficiency of the electrode, and improving, when the electrode is used in a battery 100, the manufacturing efficiency of the battery 100.

The above description merely provides preferred embodiments of the present application, and is not intended to limit the present application. For those skilled in the art, the present application may have various modifications and alterations. Any modification, equivalent replacement, improvement, and the like made within the spirit and principle of the present application shall fall within the scope of protection of the present application.

## Claims

1. An electrode manufacturing method, comprising the steps of:
providing a slurry mixed with a pore-forming agent;
coating the slurry on a current collector to form an active material layer on the current collector; and
electrically energizing the active material layer to cause the pore-forming agent in the active material layer to undergo an electrochemical reaction to form pores;
wherein, before the step of coating the slurry on the current collector, the method further comprises a step of:
providing a roller configured to coat and convey the current collector and provided with a conductive member on a surface of the roller, the conductive member being configured to electrically connect to the current collector; and
the step of electrically energizing the active material layer comprises electrically energizing the current collector through the conductive member.

2. The electrode manufacturing method according to claim 1, wherein
the pore-forming agent is configured as a substance that is electrically energized to produce a gas.

3. The electrode manufacturing method according to claim 2, wherein
the pore-forming agent comprises at least one of water, methanol, ethanol, formic acid, or ammonium carbamate.

4. The electrode manufacturing method according to claim 2 or 3, wherein
a mass proportion of the pore-forming agent in the slurry is A, satisfying 0.00001≤A≤0.2.

5. The electrode manufacturing method according to any one of claims 2-4, wherein
the pore-forming agent is a solid with a median particle size D50 of the pore-forming agent satisfying 0.001 mm≤D50≤6 mm.

6. The electrode manufacturing method according to claim 5, wherein
the median particle size D50 of the pore-forming agent satisfies 0.002 mm≤D50≤5 mm.

7. The electrode manufacturing method according to any one of claims 2-3, wherein
the step of providing the slurry further comprises mixing the slurry with a surfactant.

8. The electrode manufacturing method according to any one of claims 1-7, wherein
before the step of electrically energizing the active material layer, the method further comprises:
drying the active material layer; or
after the step of electrically energizing the active material layer, the method further comprises:
drying the active material layer.

9. The electrode manufacturing method according to any one of claims 1-8, wherein
the step of electrically energizing the active material layer comprises: forming the pores with a pore size of D, satisfying 0.001 mm≤D≤5 mm.

10. The electrode manufacturing method according to any one of claims 1-9, wherein
the step of electrically energizing the active material layer comprises: forming the pores with a spacing L between any two adjacent pores thereamong satisfying 0.01 mm≤L≤10.5 mm.

11. The electrode manufacturing method according to any one of claims 1-10, wherein
the current collector comprises an empty foil region and a coating region, and along a width direction of the current collector, the empty foil region is arranged on either side of the coating region respectively; and
the number of the conductive members is two, and the two conductive members are spaced apart along the width direction of the current collector, to contact with the corresponding empty foil regions respectively.

12. The electrode manufacturing method according to claim 11, wherein
along the width direction of the current collector, the two conductive members are configured to be positionally adjustable on the roller.

13. The electrode manufacturing method according to claim 11 or 12, wherein
along the width direction of the current collector, dimension of the conductive member is d, and dimension of the roller is W, satisfying 0.001<d/W<0.5.

14. The electrode manufacturing method according to any one of claims 1-13, wherein
the conductive member is connected to a potential controller, and the potential controller is connected to a reference electrode.

15. A battery, comprising an electrode assembly, wherein the electrode assembly comprises a first electrode, a second electrode, and a separator, the first electrode and the second electrode have opposite polarities, and the separator is arranged between the first electrode and the second electrode;
wherein the first electrode and/or the second electrode are obtained using the electrode manufacturing method according to any one of claims 1-14.

16. An electrical apparatus, comprising the battery according to claim 15, the battery being configured to provide electrical energy.
